# EUROPEAN PATENT APPLICATION

(11) **EP 2 421 253 A2**
(43) Date of publication of application: **22.02.2012**
(21) Application number: 11171460.6
(22) Date of filing: 27.06.2011
(51) Int. Cl.: H04N 5/445

(54) **Program information output control apparatus and program information output control method**

(30) Priority: 30.06.2010 JP 2010150342
(71) Applicant: Kabushiki Kaisha Toshiba, Tokyo 105-8001 (JP)
(72) Inventor: Yoshida, Osamu, Tokyo, 105-8001 (JP)
(74) Representative: HOFFMANN EITLE

(57) **Abstract**

According to one embodiment, a program information output control apparatus includes a detector (111, 124), an instruction module (122, 123), and an output controller (126). The detector is configured to detect an operation state. The instruction module is configured to instruct to output a program table. The output controller is configured to execute control to output one of first display information required to display a first program table which displays a plurality of broadcast programs corresponding to a plurality of channels along a channel axis and a time axis, and second display information required to display a second program table which displays a plurality of recorded programs corresponding to the plurality of channels along the channel axis and the time axis, in response to a detection result of the operation state and the program table output instruction.

## Description

Embodiments described herein relate generally to a program information output control apparatus and a program information output control method.

In recent years, television broadcast receivers, which receive a digital television broadcast signal, and are allowed to record and play back a program based on the received digital television broadcast signal, have prevailed. For example, the television broadcast receiver can record a program based on a digital television broadcast signal using, for example, an HDD, DVD, or BD [Blu-ray^{®}]. The television broadcast receiver acquires service information from a digital television broadcast signal, and can control to display a program table based on this service information. On the program table, a plurality of broadcast programs corresponding to a plurality of channels are displayed along a channel axis and time axis. Such a program table is called an electronic program guide (EPG).

Furthermore, in recent years, advanced television broadcast receivers each including a plurality of tuners have appeared in the market. For example, the advanced television broadcast receiver can record a plurality of programs corresponding to a plurality of channels received by the plurality of tuners within the same time slot, and can play back a recorded program selected from a plurality of recorded programs.

Moreover, the advanced television broadcast receiver can display, for example, a plurality of recorded programs in the form of a program table. Hence, the advanced television broadcast receiver can display a first program table used to display a list of a plurality of broadcast programs corresponding to a plurality of channels, and a second program table used to display a list of a plurality of recorded programs corresponding to the plurality of channels.

However, the aforementioned advanced television broadcast receiver cannot selectively display the first and second program tables to fit user's needs. For example, when the advanced television broadcast receiver accepts a display instruction of the first program table via a first program table display key while it displays a predetermined program, it displays the first program table. On the other hand, when the advanced television broadcast receiver accepts a display instruction of the second program table via a second program table display key while it displays a predetermined program, it displays the second program table.

As described above, the display control processes of the first and second program tables have no relevance. Hence, an operation via the first program table display key is required to display the first program table, and an operation via the second program table display key is required to display the second program table, resulting in inconvenience. From such situation, it is desired to improve the selective display performance of the plurality of program tables by the advanced digital television receiver.

A general architecture that implements the various features of the embodiments will now be described with reference to the drawings. The drawings and the associated descriptions are provided to illustrate the embodiments and not to limit the scope of the invention.
FIG. 1 is a block diagram showing an example of the arrangement of a digital broadcast receiver corresponding to the first to fifth embodiments;
FIG. 2 is a block diagram showing an example of the arrangement of a TS receiving processing module of the digital broadcast receiver corresponding to the first to fifth embodiments;
FIG. 3 is a view showing first and second program tables (first example);
FIG. 4 is a view showing first and second program tables (second example);
FIG. 5 is a flowchart showing an example of first display control for selectively displaying the first or second program table;
FIG. 6 is a flowchart showing an example of third display control for selectively displaying the first or second program table; and
FIG. 7 is a flowchart showing an example of fifth display control for selectively displaying the first or second program table.

Various embodiments will be described hereinafter with reference to the accompanying drawings.

In general, according to one embodiment, a program information output control apparatus includes a detector, an instruction module, and an output controller. The detector is configured to detect an operation state. The instruction module is configured to instruct to output a program table. The output controller is configured to execute control to output one of first display information required to display a first program table which displays a plurality of broadcast programs corresponding to a plurality of channels along a channel axis and a time axis, and second display information required to display a second program table which displays a plurality of recorded programs corresponding to the plurality of channels along the channel axis and the time axis, in response to a detection result of the operation state and the program table output instruction.

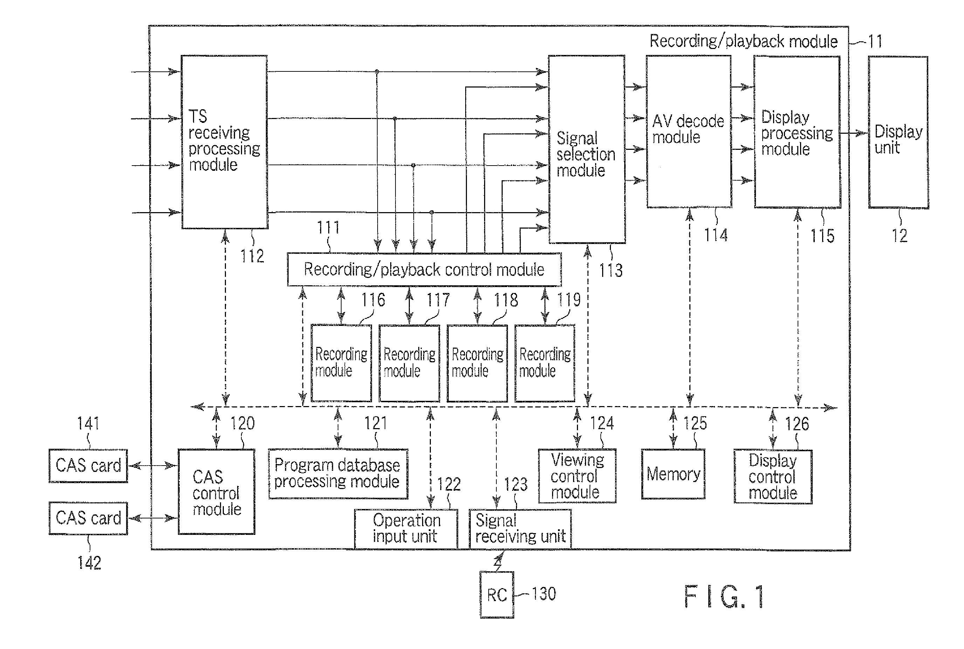

FIG. 1 is a block diagram showing an example of the arrangement of a digital broadcast receiver (program information output control apparatus) common to the first to fifth embodiments. The first to fifth embodiments will explain selective display control of program tables by a digital broadcast receiver. However, the embodiments are not limited to recording/playback control by the digital broadcast receiver. For example, the selective display control of program tables (to be described hereinafter) can also be implemented by program recorders such as an HDD recorder, BD [Blu-ray^{®}] recorder, and DVD recorder.

As shown in FIG. 1, for example, a digital broadcast receiver 10 is configured by a recording/playback module 11 and display unit 12. Note that the aforementioned program recorder is configured by the recording/playback module 11, and is different from the digital broadcast receiver 10 in that it does not have any display unit 12. The recording/playback module 11 executes selective display control of program tables to be described below.

For example, the recording/playback module 11 includes a recording/playback control module 111, TS receiving processing module 112, signal selection module 113, AV decode module 114, display processing module 115, recording modules 116 to 119, CAS control module 120, program database processing module 121, operation input unit 122, signal receiving unit 123, viewing control module 124, memory 125, and display control module 126.

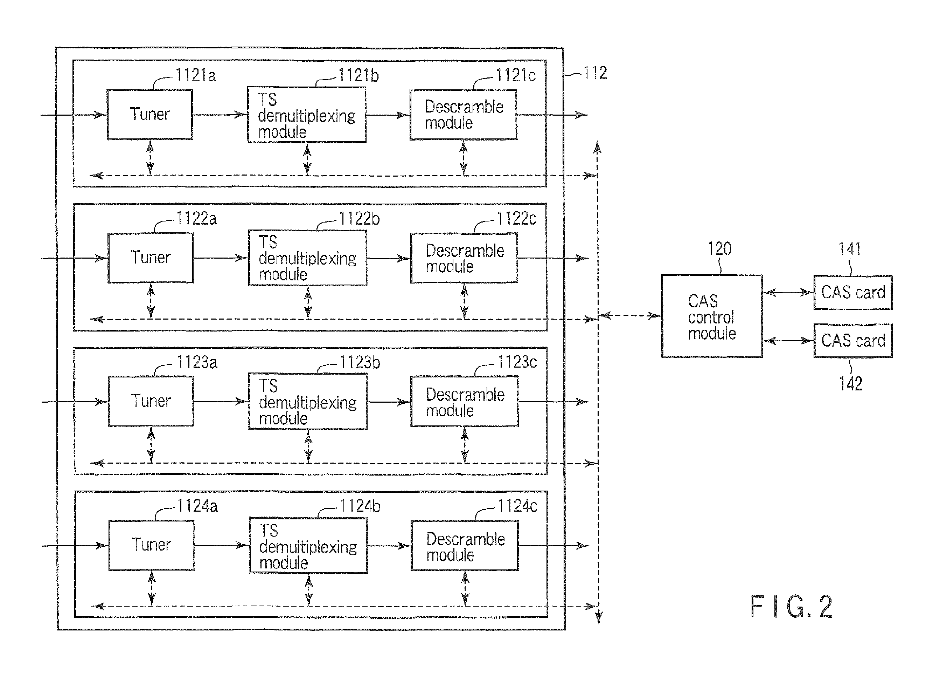

Also, as shown in FIG. 2, for example, the TS receiving processing module 112 includes a tuner 1121a, TS demultiplexing module 1121b, descramble module 1121c, tuner 1122a, TS demultiplexing module 1122b, descramble module 1122c, tuner 1123a, TS demultiplexing module 1123b, descramble module 1123c, tuner 1124a, TS demultiplexing module 1124b, and descramble module 1124c.

Tuner 1121a receives a signal of broadcast programs (content), and transmits it to the TS demultiplexing module 1121b. The TS demultiplexing module 1121b demultiplexes program information (ECM) from the signal of the broadcast programs. The demultiplexed ECM is transferred to a CAS card (smartcard) 141 or 142 inserted in a card slot (card interface) via the CAS control module 120. In the CAS card 141 or 142, the encrypted ECM is decrypted using a stored work key (Kw) to obtain a scramble key (Ks). Furthermore, attribute information associated with programs is obtained from the ECM, and is compared with contract information stored in the CAS card 141 or 142 to determine whether or not to descramble the signal. Upon making this determination, the control is executed based on a charge system designated by the attribute information of the programs. Note that the encryption keys Ks and Kw are different for respective broadcast services, but are keys common to all receivers.

The operations of tuners 1122a, 1123a, and 1124a, and the TS demultiplexing modules 1122b, 1123b, and 1124b are basically the same as those of tuner 1121a and TS demultiplexing module 1121b, and a detailed description of these operations will not be given.

For example, the CAS control module 120 sends the ECM sent from the TS demultiplexing module 1121b to the CAS card 141 or 142, and sets the scramble key Ks returned from the CAS card 141 or 142 in descramble module 1121c. Likewise, the CAS control module 120 sends the ECM sent from the TS demultiplexing module 1122b to the CAS card 141 or 142, and sets the scramble key Ks returned from the CAS card 141 or 142 in descramble module 1122c. Likewise, the CAS control module 120 sends the ECM sent from the TS demultiplexing module 1123b to the CAS card 141 or 142, and sets the scramble key Ks returned from the CAS card 141 or 142 in descramble module 1123c. Likewise, the CAS control module 120 sends the ECM sent from the TS demultiplexing module 1124b to the CAS card 141 or 142, and sets the scramble key Ks returned from the CAS card 141 or 142 in descramble module 1124c.

Each of the descramble modules 1121c to 1124c descrambles an encrypted broadcast program using the set scramble key Ks, and outputs the signal of the descrambled broadcast program to the recording/playback control module 111. The recording/playback control module 111 records the signal of the broadcast program in one of the recording modules 116 to 119 or outputs it to the signal selection module 113.

For example, the recording modules 116 to 119 include an HDD, optical disk drive, and SD^{®} card reader/writer, and are configured to record the signal of the broadcast program from the recording/playback control module 111. Note that the recording modules 116 to 119 may be external devices connected to the digital broadcast receiver 10. In this case, the output from the recording/playback control module 111 is transferred to the recording modules 116 to 119 via, for example, an IEEE 1394 interface or High-Definition Multimedia Interface (HDMI).

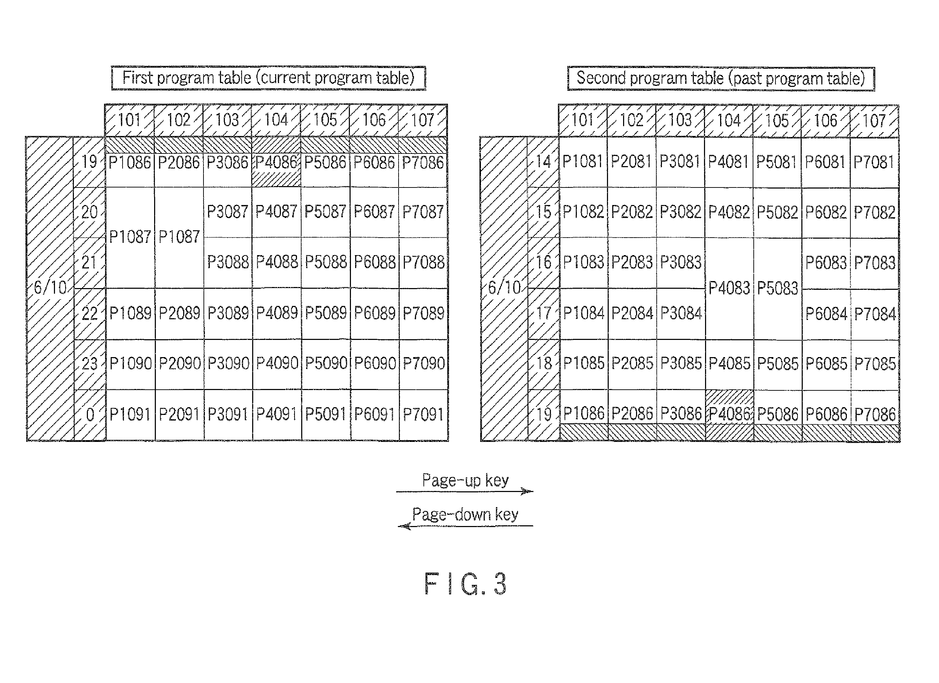

The signal selection module 113 selects a signal of a broadcast program of a selected channel in response to a channel selection (channel designation) from the user, and outputs it to the AV [audiovisual] decode module 114. The AV decode module 114 decodes the signal of the broadcast program into AV information consisting of audio and video, and outputs the AV information. The decoded output (video) is output to the display unit 12 via the display processing module 115. The display processing module 115 includes a graphical user interface (GUI) function required to present information to the user by means of, for example, on-screen display (OSD). This GUI function allows to display, for example, various kinds of setting screens on the display unit 12. Also, this GUI function allows to display a first program table (current program table shown in FIG. 3) or second program table (past program table shown in FIG. 3) on the display unit 12. The first and second program tables will be described in detail later.

The digital broadcast receiver 10 acquires program table information required to display the first or second program table from the broadcast signal. Alternatively, the digital broadcast receiver 10 acquires program table information via a network. The program database processing module 121 stores the acquired program table information, and can generate the first or second program table based on the stored program table information. For example, the display control module 126 controls the display processing module 115 to display the generated first or second program table. As described above, the display processing module 115 can display the first or second program table on the display unit 12 by the GUI function.

The operation input unit 122 includes a plurality of keys, accepts an operation input (instruction) from the user via one of these plurality of keys, and notifies, for example, the recording/playback control module 111, viewing control module 124, or display control module 126 of the accepted instruction. Likewise, a remote controller (RC) 130 includes a plurality of keys, accepts an operation input (instruction) from the user via one of these plurality of keys, and transmits the accepted instruction to the signal receiving unit 123. The signal receiving unit 123 notifies, for example, the recording/playback control module 111, viewing control module 124, or display control module 126 of the received instruction.

This embodiment will explain an operation example via the remote controller 130. A description of an operation example via the operation input unit 122 is substantially the same as that via the remote controller 130, and will not be given.

For example, the remote controller 130 accepts a channel selection instruction from the user via one of channel keys, and transmits the channel selection instruction to the signal receiving unit 123. The signal receiving unit 123 notifies the viewing control module 124 of the channel selection instruction, and the viewing control module 124 controls the signal selection module 113 based on the channel selection instruction. Then, the signal selection module 113 selects a signal of a broadcast program of a predetermined channel in response to the channel selection instruction, and the display unit 12 consequently displays video for the broadcast program of the predetermined channel.

The remote controller 130 accepts a program table display instruction from the user via a program table display key, and transmits this program table display instruction to the signal receiving unit 123. The signal receiving module 123 notifies the display control module 126 of the program table display instruction, and the display control module 126 controls to display the first or second program table (to be described later) based on the program table display instruction. In response to this, the display processing module 115 outputs the first or second program table, and the display unit 12 displays the first or second program table.

Program recording will be described below. As described above, the digital broadcast receiver 10 includes a plurality of tuners. Thus, the digital broadcast receiver 10 can concurrently record programs of a plurality of channels. FIG. 2 illustrates the digital broadcast receiver 10 including four tuners. However, this embodiment is not limited to this. A case will be assumed below wherein the digital broadcast receiver 10 includes seven tuners. That is, a case will be described below wherein the digital broadcast receiver 10 can concurrently record programs of seven channels.

For example, a case will be explained below wherein automatic program recording is set for channels 101 to 107 via, for example, the remote controller 130. For example, when all-day (24 hours) automatic program recording is set for channels 101 to 107, the recording/playback control module 111 controls to record all programs of channels 101 to 107 all day long, and the recording modules 116 to 119 record all the programs of channels 101 to 107 all day long. Note that the recording modules 116 to 119 have finite recording capacities, and a recording time is decided based on a recording bit rate (recording capacity/(recording bit rate x number of channels)). For example, the recording/playback control module 111 controls to store programs of respective channels for a maximum of 24 hours (that is, 24 hours x 7 channels = 168 hours), thus recording the latest programs of the respective channels for a maximum of 24 hours.

When automatic program recording from 19:00 to 22:00 (three hours) is set for channels 101 to 107, the recording/playback control module 111 controls to record all the programs of channels 101 to 107 from 19:00 to 22:00, and the recording modules 116 to 119 record all the programs of channels 101 to 107 from 19:00 to 22:00. In this case as well, for example, the recording/playback control module 111 controls to store the programs of the respective channels for a maximum of 24 hours (that is,
24 hours x 7 channels = 168 hours), and the latest ones of recorded programs of the respective channels are stored for a maximum of 24 hours.

The digital broadcast receiver 10 allows not only the aforementioned automatic program recording but also designated program recording. For example, the recording/playback control module 111 can accept a recording reservation of a program selected from the first program table displayed on the display unit 12, and can record the selected program. Processing for recording a program designated via the first program table in this way will be referred to as designated program recording hereinafter.

The digital broadcast receiver 10 can display a list of programs recorded by the aforementioned automatic program recording using the second program table. Also, the digital broadcast receiver 10 can display a list of programs recorded by the aforementioned designated program recording using the second program table. Furthermore, the digital broadcast receiver 10 can display a list of programs recorded by the aforementioned automatic program recording and designated program recording using the second program table. This embodiment will explain in detail a case in which a list of programs recorded by the automatic program recording is displayed using the second program table.

FIG. 3 is a view showing examples of the first program table (current program table) and second program table (past program table).

The first program table displays a plurality of broadcast programs (P1086 to P1091, P2086 to P2091, P3086 to P3091, P4086 to P4091, P5086 to P5091, P6086 to P6091, and P7086 to P7091) corresponding to a plurality of channels (for example, channels 101 to 107) along a channel axis (for example, a channel axis of channels 101 to 107) and a time axis (for example, a time axis of 19:00 to 0:00). That is, the first program table includes a plurality of broadcast program cells corresponding to the plurality of broadcast programs.

The first program table shown in FIG. 3 displays, for example, a plurality of on-air programs (P1086, P2086, P3086, P4086, P5086, P6086, and P7086) at top positions, and displays a plurality of broadcast-scheduled programs (P1087 to P1091, P2087 to P2091, P3087 to P3091, P4087 to P4091, P5087 to P5091, P6087 to P6091, and P7087 to P7091) below the plurality of on-air programs.

On the other hand, the second program table displays a plurality of recorded programs (P1081 to P1085, P2081 to P2085, P3081 to P3085, P4081 to P4085, P5081 to P5085, P6081 to P6085, and P7081 to P7085), and a plurality of on-air programs (P1086, P2086, P3086, P4086, P5086, P6086, and P7086) corresponding to the plurality of channels (for example, channels 101 to 107) along a channel axis (for example, a channel axis of channels 101 to 107) and a time axis (for example, a time axis of 14:00 to 19:00). That is, the second program table includes a plurality of broadcast program cells (a plurality of on-air program cells) corresponding to a plurality of broadcast programs (a plurality of on-air programs) and a plurality of recorded program cells corresponding to a plurality of recorded programs.

The second program table shown in FIG. 3 displays, for example, the plurality of on-air programs (P1086, P2086, P3086, P4086, P5086, P6086, and P7086) at bottom positions, and the plurality of recorded programs (P1081 to P1085, P2081 to P2085, P3081 to P3085, P4081 to P4085, P5081 to P5085, P6081 to P6085, and P7081 to P7085) above the plurality of on-air programs.

Note that the second program table may also be configured to include a plurality of recorded programs and not to include a plurality of on-air programs.

The aforementioned first program table is used to select a channel, and the second program table is used to select a recorded program. That is, the first program table can be used to tune a channel, and the second program table can be used to play back a recorded program. For example, when the user presses arrow keys on the remote controller 130 to focus a cursor on a predetermined broadcast program cell on the first program table, and then presses an enter button on the remote controller 130, he or she can tune a channel corresponding to the predetermined broadcast program cell. When the user presses the arrow keys on the remote controller 130 to focus the cursor on a predetermined recorded program cell on the second program table, and then presses the enter button on the remote controller 130, he or she can play back a recorded program corresponding to the predetermined recorded program cell.

### (First Embodiment)

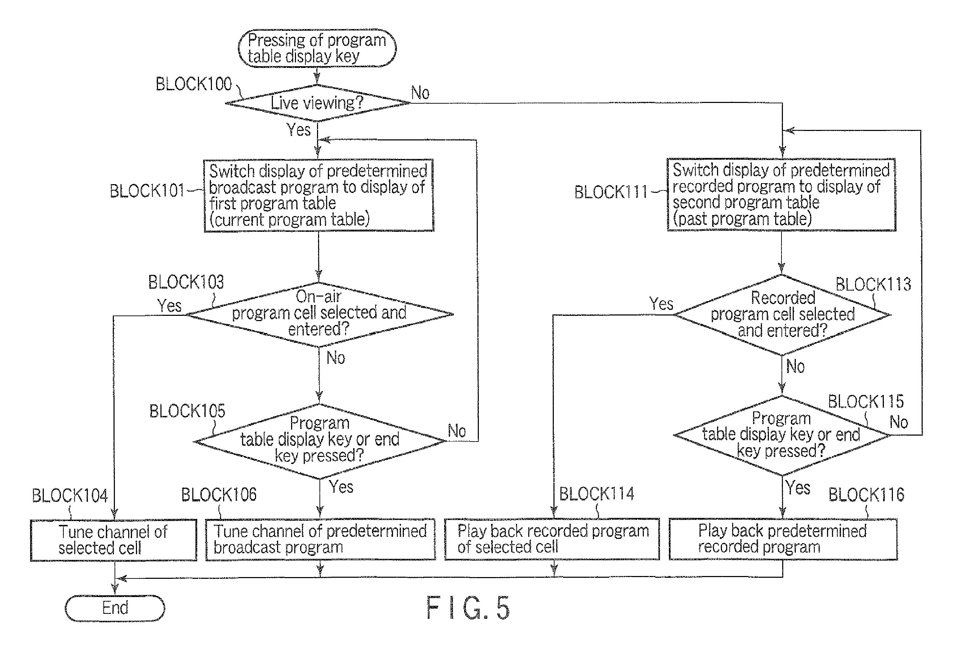

An example of first display control for selectively displaying the first or second program table will be described below. FIG. 5 is a flowchart showing an example of the first display control for selectively displaying the first or second program table.

For example, in a state in which the viewing control module 124 of the digital broadcast receiver 10 controls viewing of on-air program P4086 of channel 104 (live viewing state), that is, in a state in which the display unit 12 displays video for on-air program P4086, if the user presses the program table display key on the remote controller 130 (YES in BLOCK 100), the display control module 126 controls to display the first program table. Then, the display unit 12 displays the first program table (current program table) shown in FIG. 3 (BLOCK 101). For example, on the first program table, the cursor which is focused on the cell of the on-air program (viewing program) P4086 is displayed.

If the remote controller 130 accepts a cursor move instruction from the user via, for example, the arrow keys (designation keys of four directions, that is, upper, lower, right, and left directions) while the first program table is displayed, it transmits the cursor move instruction to the signal receiving unit 123. The signal receiving unit 123 notifies the display control module 126 of the cursor move instruction, and the display control module 126 controls to display the first program table based on the cursor move instruction. In response to this, the display processing module 115 switches output of the first program table including the cursor displayed on the cell of on-air program P4086 to that of the first program table including the cursor displayed on a cell of, for example, on-air program P3086.

Furthermore, if the remote controller 130 accepts an enter instruction from the user via, for example, the enter key (YES in BLOCK 103), it transmits the enter instruction to the signal receiving unit 123. The signal receiving unit 123 notifies the viewing control module 124 of the enter instruction, and the viewing control module 124 controls viewing of, for example, on-air program P3086 based on the enter instruction. In response to this, the signal selection module 113 selects a signal of channel 103 (BLOCK 104), and the display unit 12 displays video for on-air program P3086 of channel 103.

If the user presses the program table display key or an end key on the remote controller 130 while the first program table is displayed (YES in BLOCK 105), the viewing control module 124 controls viewing of, for example, on-air program P4086 (a program [last channel] viewed before the first program table is displayed). In response to this, the signal selection module 113 selects a signal of channel 104 (BLOCK 106), and the display unit 12 displays video for on-air program P4086.

Also, for example, in a state in which the recording/playback control module 111 and viewing control module 124 of the digital broadcast receiver 10 play back recorded program P4085, that is, in a state in which the display unit 12 displays video for recorded program P4085, if the user presses the program table display key on the remote controller 130 (NO in BLOCK 100), the display control module 126 controls to display the second program table, and the display unit 12 then displays the second program table (past program table) shown in FIG. 3 (BLOCK 111). For example, on the second program table, the cursor which is focused on a cell of recorded program P4085 that is being played back is displayed.

If the remote controller 130 accepts a cursor move instruction from the user via, for example, the arrow keys (designation keys of four directions, that is, upper, lower, right, and left directions) while the second program table is displayed, it transmits the cursor move instruction to the signal receiving unit 123. The signal receiving unit 123 notifies the display control module 126 of the cursor move instruction, and the display control module 126 controls to display the second program table based on the cursor move instruction. In response to this, the display processing module 115 switches output of the second program table including the cursor displayed on the cell of recorded program P4085 that is being played back to that of the second program table including the cursor displayed on a cell of, for example, recorded program P3085.

Furthermore, if the remote controller 130 accepts an enter instruction from the user via, for example, the enter key (YES in BLOCK 113), it transmits the enter instruction to the signal receiving unit 123. The signal receiving unit 123 notifies the recording/playback control module 111 and viewing control module 124 of the enter instruction, and the recording/playback control module 111 and viewing control module 124 control to play back, for example, on-air program P3085 based on the enter instruction. In response to this, the signal selection module 113 selects a playback signal of recorded program P3085 (BLOCK 114), and the display unit 12 displays video for recorded program P3085.

If the user presses the program table display key or end key on the remote controller 130 while the second program table is displayed (YES in BLOCK 115), the recording/playback control module 111 and viewing control module 124 control to play back, for example, recorded program P4085 (a program [last content] played back before the second program table is displayed). In response to this, the signal selection module 113 selects a playback signal of recorded program P4085 (BLOCK 116), and the display unit 12 displays video for recorded program P4085.

That is, as described above, when the recording/playback control module 111 and viewing control module 124 of the digital broadcast receiver 10 detect a first state in which an on-air program is viewed (output) or a second state in which a recorded program is played back (output), and the display control module 126 controls to display (output) the first or second program table in response to the state detection result and the program table display instruction. That is, if the first state is detected, the display control module 126 controls to display (output) the first program table, and if the second state is detected, it controls to display (output) the second program table.

Note that the display control module 126 may control to display (output) the first or second program table in response to the state detection result and program table display instruction under the condition that the automatic program recording is active (functions). That is, when the automatic program recording is inactive, the first program table is displayed but the second program table is not displayed in response to the program table display instruction.

As described above, the first and second program tables can be selectively displayed to fit the user's needs.

### (Second Embodiment)

An example of second display control for selectively displaying the first or second program table will be described below.

For example, the memory 125 of the digital broadcast receiver 10 stores a display history (output history) of the first and second program tables, and the display control module 126 controls to display (output) the first or second program table based on the display history.

For example, upon issuing a program table display instruction by the program table display key when the first program table was displayed at the previous timing (immediately preceding timing), the display control module 126 controls to display (output) the first program table. Conversely, upon issuing a program table display instruction by the program table display key when the second program table was displayed at the previous timing (immediately preceding timing), the display control module 126 controls to display (output) the second program table.

Furthermore, the first display control described in the first embodiment can be combined with the second display control described in this second embodiment.

For example, when the program table display instruction is issued by the program table display key in a first state in which it is detected that an on-air program is being viewed, the display control module 126 controls to display the first program table. On the other hand, when the program table display instruction is issued by the program table display key in a second state in which it is detected that a recorded program is being played back, the display control module 126 controls to display the second program table. Also, when the program table display instruction is issued by the program table display key in a third state in which neither viewing of an on-air program nor playback of a recorded program are detected, the display control module 126 controls to display the first or second program table based on the display history.

In the third state, video for a site on the Internet is played back by a network function of the digital broadcast receiver 10. Alternatively, in the third state, video for a package medium is played back by a package medium playback function of the digital broadcast receiver 10.

As described above, the first and second program tables can be selectively displayed to fit the user's needs.

### (Third Embodiment)

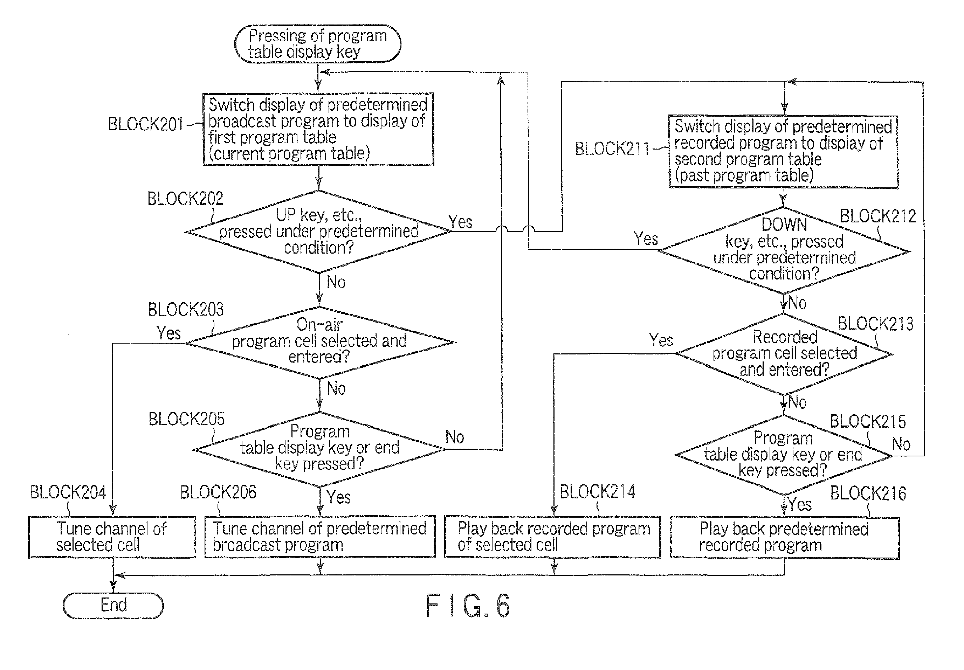

An example of third display control for selectively displaying the first or second program table will be described below. FIG. 6 is a flowchart showing an example of the third display control for selectively displaying the first or second program table.

For example, in a first state in which the display unit 12 of the digital broadcast receiver 10 displays (outputs) the first program table shown in FIG. 3 (BLOCK 201), if the remote controller 130 accepts a move instruction of the cursor in a past time direction or a page-up instruction via arrow keys (designation keys of four directions, that is, upper, lower, right, and left directions) or a page-up key (YES in BLOCK 202), the display control module 126 switches display (output) of the first program table shown in FIG. 3 to that of the second program table shown in FIG. 3, and the display unit 12 displays the second program table (BLOCK 211). In the first state, for example, the cursor is focused on a predetermined on-air program cell (P4086) in the first program table.

Note that BLOCK 203 to BLOCK 206 correspond to BLOCK 103 to BLOCK 106 described above, and a description thereof will not be repeated.

The third embodiment has explained the case in which the second program table includes a plurality of on-air programs. Hence, the cursor is focused on the predetermined on-air program cell (P4086) on the first program table before display switching, and is also focused on the predetermined on-air program cell (P4086) on the second program table after display switching.

For example, in a case in which the second program table does not include a plurality of on-air programs, the cursor is focused on the predetermined on-air program cell (P4086) on the first program table before display switching, and is focused on a predetermined recorded program cell (P4085) which is temporally closest to the predetermined on-air program cell (P4086) on the second program table after display switching. In other words, the cursor is focused on the predetermined recorded program cell (P4085) in the newest time slot in a plurality of recorded program cells included in the second program table after display switching.

Alternatively, even when the second program table includes a plurality of on-air programs, the cursor may be focused on the predetermined on-air program cell (P4086) on the first program table before display switching, and may be focused on a predetermined recorded program cell (P4085) which is temporally closest to the predetermined on-air program cell (P4086) on the second program table after display switching.

On the other hand, for example, in a second state in which the display unit 12 of the digital broadcast receiver 10 displays (outputs) the second program table shown in FIG. 3 (BLOCK 211), if the remote controller 130 accepts a move instruction of the cursor in a future time direction or a page-down instruction via arrow keys (designation keys of four directions, that is, upper, lower, right, and left directions) or a page-down key (YES in BLOCK 212), the display control module 126 switches display (output) of the second program table shown in FIG. 3 to that of the first program table shown in FIG. 3, and the display unit 12 displays the second program table (BLOCK 201). In the second state, for example, the cursor is focused on a predetermined on-air program cell (P4086) in the second program table.

Note that BLOCK 213 to BLOCK 216 correspond to BLOCK 113 to BLOCK 116 described above, and a description thereof will not be repeated.

The third embodiment has explained the case in which the second program table includes a plurality of on-air programs. Hence, the cursor is focused on the predetermined on-air program cell (P4086) on the second program table before display switching, and is also focused on the predetermined on-air program cell (P4086) on the first program table after display switching.

For example, in a case in which the second program table does not include a plurality of on-air programs, the cursor is focused on the predetermined recorded program cell (P4085) on the second program table before display switching, and is focused on the predetermined on-air program cell (P4086) on the first program table after display switching.

As described above, the first and second program tables can be selectively displayed to fit the user's needs.

### (Fourth Embodiment)

An example of fourth display control for selectively displaying the first or second program table will be described below. The third display control has been described under the precondition of the automatic program recording all day long (24 hours). The fourth display control will be described under the precondition of automatic program recording from, for example, 19:00 to 22:00 (three hours).

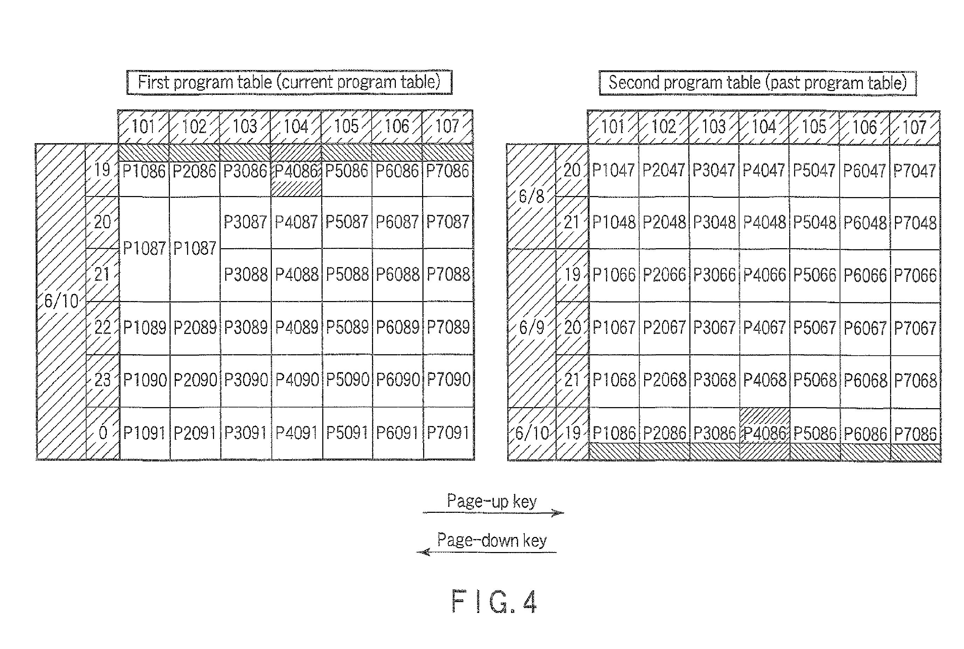

For example, in a first state in which the display unit 12 of the digital broadcast receiver 10 displays (outputs) the first program table shown in FIG. 4, if the remote controller 130 accepts a move instruction of the cursor in a past time direction or a page-up instruction via arrow keys (designation keys of four directions, that is, upper, lower, right, and left directions) or a page-up key (YES in BLOCK 202), the display control module 126 switches display (output) of the first program table shown in FIG. 4 to that of the second program table shown in FIG. 4, and the display unit 12 displays the second program table. In the first state, for example, the cursor is focused on a predetermined on-air program cell in the first program table.

The fourth embodiment has explained the case in which the second program table includes a plurality of on-air programs. Hence, the cursor is focused on the predetermined on-air program cell (P4086) on the first program table before display switching, and is also focused on the predetermined on-air program cell (P4086) on the second program table after display switching.

For example, in a case in which the second program table does not include a plurality of on-air programs, the cursor is focused on the predetermined on-air program cell (P4086) on the first program table before display switching, and is focused on a predetermined recorded program cell (P4068) which is temporally closest to the predetermined on-air program cell (P4086) on the second program table after display switching. In other words, the cursor is focused on the predetermined recorded program cell (P4068) in the newest time slot in a plurality of recorded program cells included in the second program table after display switching.

Alternatively, even when the second program table includes a plurality of on-air programs, the cursor may be focused on the predetermined on-air program cell (P4086) on the first program table before display switching, and may be focused on the predetermined recorded program cell (P4068) which is temporally closest to the predetermined on-air program cell (P4086) on the second program table after display switching, as described above.

On the other hand, for example, in a second state in which the display unit 12 of the digital broadcast receiver 10 displays (outputs) the second program table shown in FIG. 4, if the remote controller 130 accepts a move instruction of the cursor in a future time direction or a page-down instruction via arrow keys (designation keys of four directions, that is, upper, lower, right, and left directions) or a page-down key, the display control module 126 switches display (output) of the second program table shown in FIG. 4 to that of the first program table shown in FIG. 4, and the display unit 12 displays the second program table. In the second state, for example, the cursor is focused on the predetermined on-air program cell (P4086) in the second program table.

The fourth embodiment has explained the case in which the second program table includes a plurality of on-air programs. Hence, the cursor is focused on the predetermined on-air program cell (P4086) on the second program table before display switching, and is also focused on the predetermined on-air program cell (P4086) on the first program table after display switching.

For example, in a case in which the second program table does not include a plurality of on-air programs, the cursor is focused on the predetermined recorded program cell (P4068) on the second program table before display switching, and is focused on the predetermined on-air program cell (P4086) on the first program table after display switching.

As described above, the first and second program tables can be selectively displayed to fit the user's needs.

### (Fifth Embodiment)

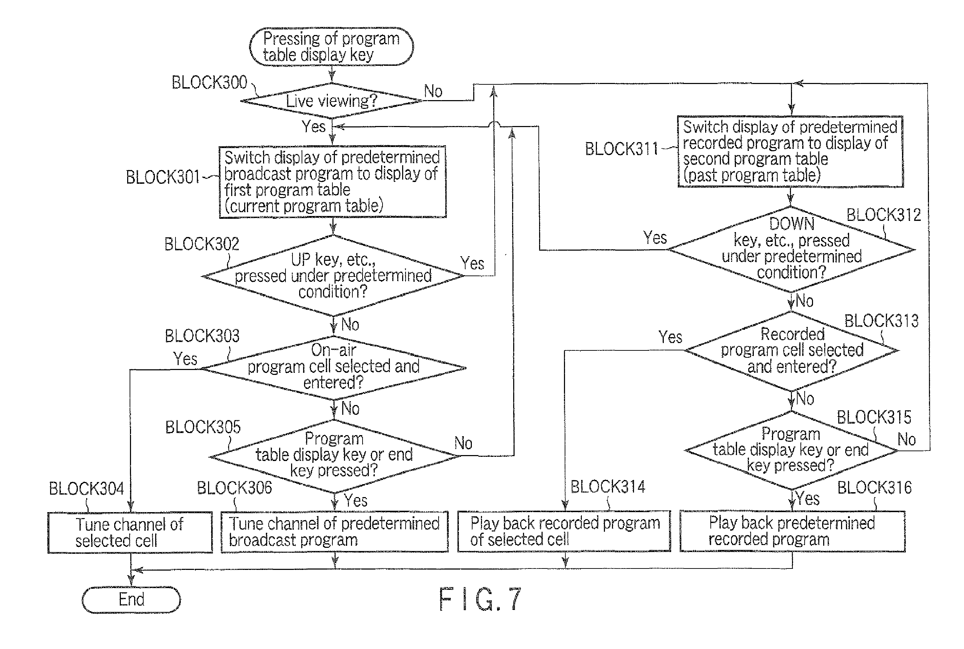

An example of fifth display control for selectively displaying the first or second program table will be described below. FIG. 7 is a flowchart showing an example of the fifth display control for selectively displaying the first or second program table.

For example, in a state in which the viewing control module 124 of the digital broadcast receiver 10 controls viewing of on-air program P4086 of channel 104 (live viewing state), that is, in a state in which the display unit 12 displays video for on-air program P4086, if the user presses the program table display key on the remote controller 130 (YES in BLOCK 300), the display control module 126 controls to display the first program table. Then, the display unit 12 displays the first program table (current program table) shown in FIG. 3 (BLOCK 381).

Also, for example, in a state in which the recording/playback control module 111 and viewing control module 124 of the digital broadcast receiver 10 play back recorded program P4085, that is, in a state in which the display unit 12 displays video for recorded program P4085, if the user presses the program table display key on the remote controller 130 (NO in BLOCK 300), the display control module 126 controls to display the second program table, and the display unit 12 then displays the second program table (past program table) shown in FIG. 3 (BLOCK 311).

For example, in a first state in which the display unit 12 of the digital broadcast receiver 10 displays (outputs) the first program table shown in FIG. 3 (BLOCK 301), if the remote controller 130 accepts a move instruction of the cursor in a past time direction or a page-up instruction via arrow keys (designation keys of four directions, that is, upper, lower, right, and left directions) or a page-up key (YES in BLOCK 302), the display control module 126 switches display (output) of the first program table shown in FIG. 3 to that of the second program table shown in FIG. 3, and the display unit 12 displays the second program table (BLOCK 311).

Note that BLOCK 303 to BLOCK 306 correspond to BLOCK 103 to BLOCK 106 described above, and a description thereof will not be repeated.

On the other hand, for example, in a second state in which the display unit 12 of the digital broadcast receiver 10 displays (outputs) the second program table shown in FIG. 3 (BLOCK 311), if the remote controller 130 accepts a move instruction of the cursor in a future time direction or a page-down instruction via arrow keys (designation keys of four directions, that is, upper, lower, right, and left directions) or a page-down key (YES in BLOCK 312), the display control module 126 switches display (output) of the second program table shown in FIG. 3 to that of the first program table shown in FIG. 3, and the display unit 12 displays the first program table (BLOCK 301). Note that BLOCK 313 to BLOCK 316 correspond to BLOCK 113 to BLOCK 116 described above, and a description thereof will not be repeated.

According to the aforementioned first to fifth embodiments, a program information output control apparatus and program information output control method, which are excellent in selective display control of a plurality of program tables, can be provided.

The various modules of the embodiments described herein can be implemented as software applications, hardware and/or software modules, or component on one or more computers, such as servers. While the various modules are illustrated separately, they may share some or all of the same underlying logic or code.

## Claims

1. A program information output control apparatus comprising:
a detector (111, 124) configured to detect an operation state;
an instruction module (122, 123) configured to instruct to output a program table; and
an output controller (126) configured to execute control to output one of first display information required to display a first program table which displays a plurality of broadcast programs corresponding to a plurality of channels along a channel axis and a time axis, and second display information required to display a second program table which displays a plurality of recorded programs corresponding to the plurality of channels along the channel axis and the time axis, in response to a detection result of the operation state and the program table output instruction.

2. The apparatus of Claim 1, **characterized in that** the detector is configured to detect a first state in which an on-air program is output, and a second state in which a recorded program is output, and
the output controller is configured to execute control to output the first display information in response to detection of the first state and the program table output instruction, and to output the second display information in response to detection of the second state and the program table output instruction.

3. The apparatus of Claim 1 or 2, **characterized by** further comprising:
a program receiver configured to concurrently receive the plurality of channels; and
a program recorder configured to concurrently record the plurality of channels.

4. The apparatus of one of Claims 1 to 3, **characterized by** further comprising:
a memory configured to store an output history of the first display information and the second display information,
**characterized in that** the output controller is configured to execute control to output one of the first display information and the second display information based on the output history in response to detection of a third state different from the first state and the second state, and the program table output instruction.

5. The apparatus of Claim 4, **characterized in that** the output controller is configured to execute control, in response to detection of the third state and the program table output instruction, to output the first display information when the output history indicates that the first display information was displayed at an immediately preceding timing, and to output the second display information when the output history indicates that the second display information was displayed at an immediately preceding timing.

6. The apparatus of one of Claims 1 to 5, **characterized in that** the output controller is configured to switch output of the first display information to output of the second display information in response to a predetermined instruction by the instruction module.

7. The apparatus of one of Claims 1 to 6, **characterized in that** the first program table comprises a plurality of broadcast program cells corresponding to the plurality of broadcast programs,
the instruction module is configured to instruct to move a cursor focused on a predetermined broadcast program cell in the plurality of broadcast program cells, and
the output controller is configured to switch output of the first display information to output of the second display information in response to a move instruction of the cursor in a past time direction by the instruction module during output of the first display information.

8. The apparatus of Claim 7, **characterized in that** the second program table comprises a plurality of recorded program cells corresponding to the plurality of recorded programs, and
the output controller is configured to switch output of the first display information to output of the second display information required to display the second program table in a state in which the cursor is focused on a predetermined recorded program cell in a newest time slot in the plurality of recorded program cells, in response to the move instruction of the cursor in the past time direction by the instruction module.

9. The apparatus of one of Claims 1 to 8, **characterized in that** the output controller is configured to switch output of the second display information to output of the first display information in response to a predetermined instruction by the instruction module.

10. The apparatus of one of Claims 1 to 9, **characterized in that** the second program table comprises a plurality of recorded program cells corresponding to the plurality of recorded programs,
the instruction module is configured to instruct to move a cursor focused on a predetermined recorded program cell in the plurality of recorded program cells, and
the output controller is configured to switch output of the second display information to output of the first display information in response to a move instruction of the cursor in a current or future time direction by the instruction module during output of the second display information.

11. A program information output control method comprising:
detecting an operation state;
instructing to output a program table; and
outputting one of first display information required to display a first program table which displays a plurality of broadcast programs corresponding to a plurality of channels along a channel axis and a time axis, and second display information required to display a second program table which displays a plurality of recorded programs corresponding to the plurality of channels along the channel axis and the time axis, in response to a detection result of the operation state and the program table output instruction.
